# EUROPEAN PATENT SPECIFICATION

(11) **EP 1 768 298 B1**
(45) Date of publication and mention of the grant of the patent: **26.03.2008**
(21) Application number: 05023686.8
(22) Date of filing: 28.10.2005
(51) Int. Cl.: H04L 7/08, H04L 25/49

(54) **Apparatus and method for inserting synchronization headers into serial data communication streams**
Vorrichtung und Verfahren zum Einfügen von Synchronisationsköfpen in serielle Datenkommunikationsströme
Dispositif et procédé pour insérer des têtes de synchronisation dans des flux de communication de données

(30) Priority: 27.09.2005 EP 05021064
(43) Date of publication of application: 28.03.2007
(73) Proprietor: Rohde & Schwarz GmbH & Co. KG, 81671 München (DE)
(72) Inventor: Landolt, Oliver, Dr., 82024 Taufkirchen (DE)
(74) Representative: Körfer, Thomas

(56) References cited:
- DE-A1- 3 444 315
- DE-A1- 3 526 052
- DE-A1- 3 835 338
- US-A1- 2004 075 594
- WIDMER A X ET AL: "A DC-BALANCED, PARTITIONED-BLOCK, 8B/10B TRANSMISSION CODE" IBM JOURNAL OF RESEARCH AND DEVELOPMENT, INTERNATIONAL BUSINESS MACHINES CORPORATION, NEW YORK, NY, US, vol. 27, no. 5, 1 September 1983 (1983-09-01), pages 440-451, XP000560679 ISSN: 0018-8646

## Description

The present patents application concerns data communication from a transmitter chip to a receiver chip over multiple high-speed serial lanes.

For data communication between two chips, it is common to use parallel buses with a relatively low data rate per I/O pin, whereby the interface circuitry remains simple. In order to obtain higher data rates, the bus width can be increased while keeping the data rate per input-output (I/O) pin constant. However, there exist applications where the required data rate is that high that the number of I/O pins per chip and the number of lines between the two chips are a significant constraint in the design. For example, one such application is an analog-to-digital (A/D) converter operating at a rate of several billion samples per second. At such data rates, it becomes necessary to develop advanced interface circuitry at the transmitter and receiver end in order to transmit data as fast as physically possible over each line. Thus a high number of links between the two chips can be avoided. The data rate per line can be maximized by high-speed serial schemes in which the receiver recovers both clock and data from the signal. Such high-speed serial interfaces are already in widespread use in many telecommunication- and computer-related products. Examples are fiber optic interfaces or hard disks.

One issue that has to be addressed when a serial data transmission scheme is designed is synchronization between transmitter and receiver. Special indicators are inserted in the data flow in order to determine where a data frame begins and ends. In order to take care of this additional signalling effort, the bit transfer rate over the physical channel is somewhat higher than the rate at which useful data is written to the transmitter interface. For instance, the 10Gb/s Ethernet standard is based on frames with a length of 66 bits where 64 bits constitute payload data and 2 bits are used for synchronization. The transmit clock rate specified in this standard is 10.31GHz that is 66/64·10GHz. The ratio between the transmit clock rate and the clock rate of the data to transmit is integer, since the data is received from the transmitter on a 64-bit wide parallel bus that is clocked with a frequency of 156.25 MHz which is typically derived from the same frequency reference as the 10GHz base clock. The handling of clock frequencies at circuit interfaces or if occuring within circuits which are not a multiple of a common base clock is a substantial difficulty or even poses intractable problems. An example solution could be FIFO buffering implying, however, a large overhead in hardware and power consumption.

For such applications, it is possible to implement transmitter circuits that distribute the data over several high-speed serial lanes.

The document DE 35 26 052 describes a parallel-to-serial converter for a digital communications system. In this converter, n-bit wide parallel input words are recoded into (n+1)-bit wide parallel words, prior to serialisation for transmission over a single high-speed data lane. Every k-th word is sent uncoded, whereby the unused bit is used to insert a synchronisation bit into the (n+1)th serial data lane.

In telecommunication systems, insertion of synchronization symbols into data streams is a complex process involving several layers. Usually from layer to layer additional information such as address information, check sums, or additional flags for the communication between layers having the same task within the OSI model are attached to the data. The layer most closely related to the invention described herein is the Physical Layer (PHY) which is further decomposed in the 802.3 IEEE Standard for Information Technology and its amended document 802.3ae. It can be roughly described as build up of the elements GMII (Gigabit Media Independent Interface), the Physical Coding Sublayer (PCS), the Physical Medium Attachment (PMA), and a Medium Dependent Interface (MDI).

An encoder that is used in this standard and that was published in A. Widmer, P. Franaszek, "A DC-Balanced, Partitioned-Block, 8B/10B Transmission Code", IBM Journal of Research and Development, Vol. 27, No. 5, pp. 440-451, Sep. 1983 expands incoming parallel data by means of a look-up table. This expanded data is serialized and then transmitted over a serial data line. This encoder is considered an alternative possibility to insert additional data such as headers into a parallel and constantly incoming data stream in a controlled way. As is described later, in contrast to the present invention no buffer is required since the solution is based on a look-up table.

This existing approach for inserting synchronization symbols works well when the data to be transmitted is received in parallel words at a much slower rate than the symbol rate on the high-speed serial output. In applications such as the mentioned high-speed A/D converters, the input data or sampling rate equals the output symbol rate which can possibly be in the order of several billion data words per second. A straightforward but inefficient solution for inserting synchronization symbols would be to deserialize each incoming high-speed bit stream into a much slower parallel word stream. Then the 8B/10B encoder of Widmer and Franaszek would be applied.

However, deserialization of a high-speed bit stream followed by serialization requires large amounts of circuitry running at high speed, which implies large power consumption. Also, since the output bit rate must be somewhat higher than the input bit rate, this solution would require the interfacing of clock frequencies, e.g. from 10GHz to 66/64·10GHz, which requires respective clock conversion circuits or devices.

The object of the present invention is to provide an apparatus and a method with the basic layout for an transmission circuit that potentially requires less component overhead and reduces power consumption.

The object is solved by an apparatus according to claim 1 and by a method according to claim 6. The dependent claims present further embodiments and specific implementation issues.

The inventive apparatus comprises an input channel receiving B symbol, a first output channel outputting A symbols, a second output channel outputting B symbols, a header sequence generator generating H header symbols, at least one multiplexer per output channel, a temporary storage unit storing H x B input symbols, and a control unit co-ordinating the operation of the header sequence generator, the multiplexer and the temporary storage unit according to a clock signal.

The inventive method comprises the steps of restarting of the header sequence generator to generate a header of H symbols; instructing of all multiplexers to select the current header symbol and to ignore the current data symbol; instructing of the temporary storage unit to store H x B incoming data symbols; maintaining of the settings for H clock cycles; and thereafter, instructing of the first multiplexer and the second multiplexer to select the next data symbol from the temporary storage unit and from the input channel.

The present invention enables efficient insertion of synchronization symbols within the same clock domain with relatively modest hardware overhead. In particular, hardware required for deserialization into parallel lower-speed word streams is avoided. Thus, power consumption is reduced.

Operating in one clock domain avoids any clock conversion may it be integer or non-integer. It also avoids resampling and FIFO buffering. Thus, the number of circuit elements required is minimized implying minimum power consumption.

An embodiment of the invention is now described with respect to the drawings. In the drawings
- Fig. 1: shows the PCS encode function as embedded between XGMII and PMA layer according to the IEEE 802.3 Ethernet standard;
- Fig. 2: shows the 8B/10B coding scheme according to A. Widmer and P. Franaszek, "A DC-Balanced, Partioned-Block, 8B/10B Transmission Code,";
- Fig. 3: shows coding tables for 5B/6B and 3B/4B encoding;
- Fig. 4: shows a block diagram of a transmitter circuit according to the state of the art;
- Fig. 5: shows the insertion of synchronization headers in B parallel data streams using state-of-the art circuits;
- Fig. 6: shows a block diagram of a transmitter circuit according to an embodiment of the invention and
- Fig. 7: shows a table with example data streams according to the embodiment of the invention.

In order to improve the understanding of the invention, the related background art is briefly described hereafter.

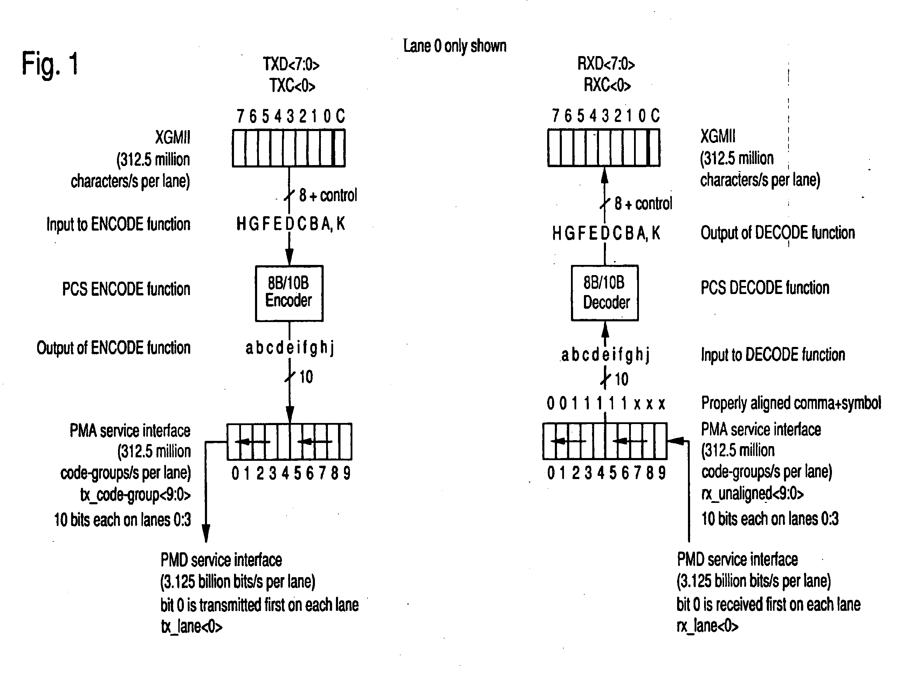

The purpose of the physical coding sublayer is shown in Fig. 1. As described, from the 10 Gigabit Media Independent Interface (XGMII) a high rate (312,5 million characters per second and lane) is output to a 8B/10B encoder via an 8 bit line (indexed with HGFEDCBA) plus an auxiliary control line, indexed with K. To the PCS a number of four lines is provided each having the mentioned 312,5 million characters per second transfer rate. On the output side the 8B/10B encoder is provided to the PMA (Physical Medium Attachment). The PMA serializes and further forwards the 10 bit wide data stream to the PMD service interface, now handling 3.125 billion bits per second per lane. On the right hand side the 3.125 billion bits/s are handled in reverse order, deserialized and decoded by a 8B/10B decoder providing a combined 8 bit data/control parallel stream, HGFEDCBA+K, to the XGMII input register. A 8B/10B coding/ decoding scheme will be explained in the subsequent text.

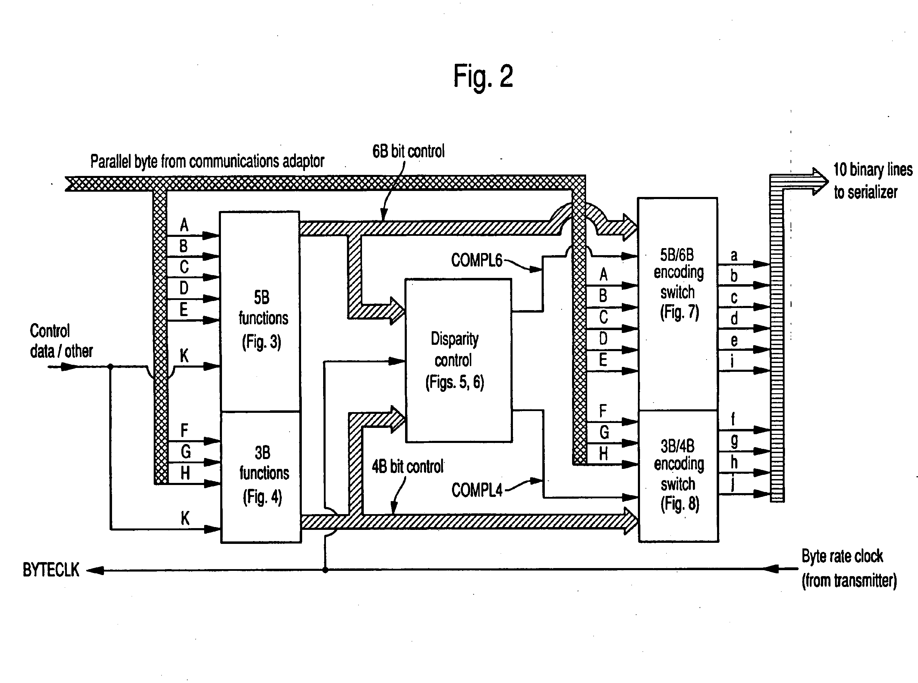

The 8B/10B coder published in A. Widmer, P. Franaszek, "A DC-Balanced, Partitioned-Block, 8B/10B Transmission Code", IBM Journal of Research and Development, Vol. 27, No. 5, pp. 440-451, Sep. 1983 is shown in Fig. 2. This encoder is very similar to the one employed in the PCS as described above. Channels A to E are converted by the 5B/6B encoding switch and encoded signals are written to or transferred via channels a to i. In a second stage channels F to H are encoded via a 3B/4B encoding switch and the encoded data words are written to channels f to j. These two combined coders provide the 8B/10B encoder published as in the above paper. Control line K indicates according to its status (0 or 1) whether data (0) or control information (1) is transmitted.

Disparity is an important concept for the mentioned 8B/10B encoder. Disparity of a block of data measures the difference between the number of 1s and 0s in the block; positive and negative disparity numbers refer to an excess of 1s and 0s, respectively. Thus disparity is a measure for the dc balance of a channel. For both the 6B = abcdei and 4B = fghj subblocks, the permitted disparity is either 0, +2, or -2. Coding rules require that the polarity alternates if a disparity different from zero occurs. For this purpose, no distinction is made between 6B (6 bit) and 4B (4 bit) subblocks.

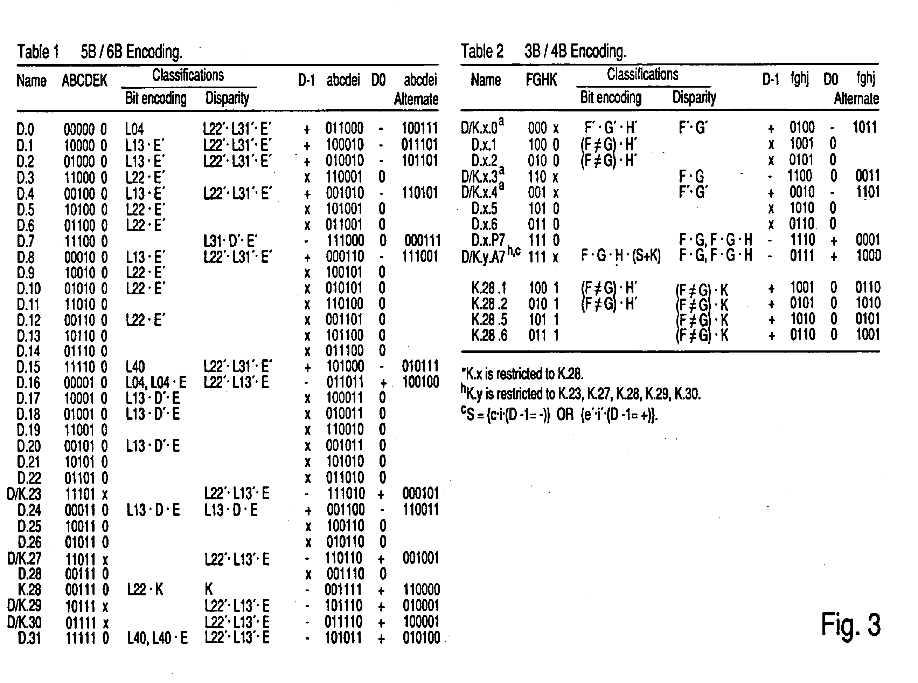

The encoding scheme conducted by the 8B/10B encoder in Fig. 2 is accomplished by a bit mapping of channels A to E to the channels a to i according to table 1 in Fig. 3 and the mapping of the channels FGH to fghj is accomplished by the code given in table 2 in Fig. 3. In case of the 5B/6B encoding according to table 1 the left hand side column headed by 'Name' gives the 32 equivalents for the input channels A to E. Regular data, D.x, is indicated by setting line K to 0. To encode special characters the K line is set to 1.

When the inputs meet the logical conditions listed on the left side under 'bit encoding,' then the bold type bits are changed to the values shown in the left 'abcdei' column; e.g. if L04 holds, the b and c digits are forced to 1s, as shown for D.0 and D16. The second entry in the 'bit encoding' column for D.16 (L04 · E) and D.31 (L40 · E) applies to the i-digit. For lines with no classification entry, the ABCDE bits translate unchanged into abcde and the added i-bit is set to zero.

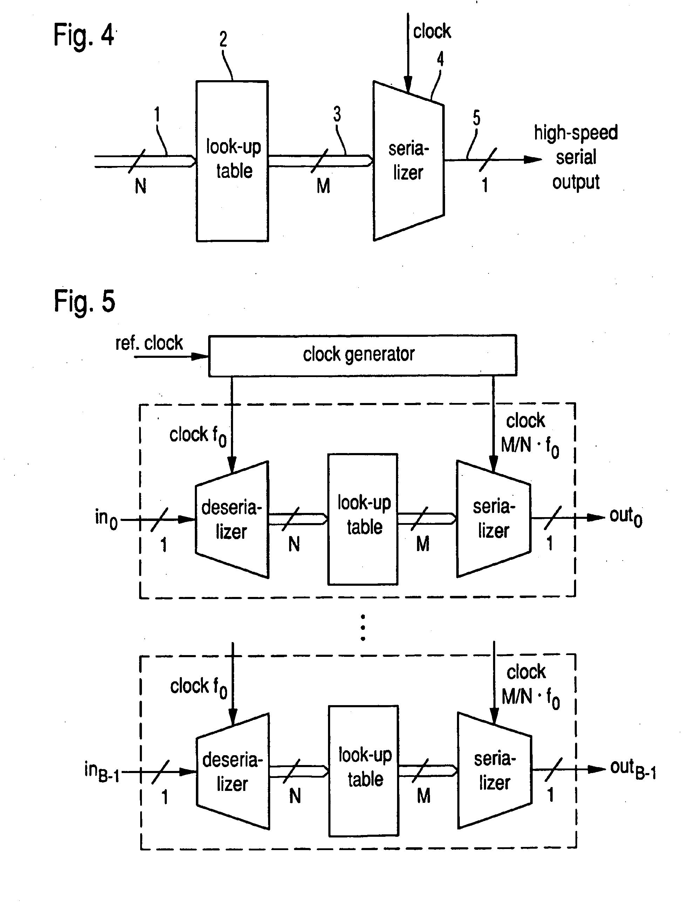

In order to make clear the distinction of the invention with respect to the 8B/10B encoder by Widmer and Franaszek, a generalized view of the 8B/10B encoder is developped. This generalized view is shown in Fig. 4. The parallel input lanes ABCDE and FGH are combined into a single input lane indexed with 1 of a width of N bits. The task of the two encoding switches is represented by look-up table 2. Output lines abcdei and fghj are combined into a single look-up table output line 3 of a width of M bits where M > N. Serialization is conducted with serializer 4 which is, in contrast to the paper, explicitly shown and the high speed serial output from the serializer 4 is represented by the 1-bit line 5. The serializer 4 is provided with a high speed clock of frequency f0. The look-up table is clocked with a derived clock frequency of f0/M.

The invention applies to situations where the incoming data rate is so high that further serialization by a factor M is impractical. To handle this situation using state-of-the art techniques, it would be necessary to deserialize each incoming high-speed input data stream into a slower rate of parallel words, then feed these words into a look up table and serialize the output again. As an example, Fig. 5 shows the case of B incoming data streams where the input and output payload data rates are both equal to f0. The raw data rate on the output side is somewhat higher than f0, namely M/N·f0, in order to accommodate the synchronization overhead introduced through the look-up tables. Thereby, this circuit needs two different clocks with frequencies in the ratio M/N.

The invention described hereafter has the same function as the circuit shown in Fig. 5, but does not need a deserializer and a serializer per data stream, nor does it need a clock generator capable of producing two clock frequencies in the ratio M/N. Thereby, the invention enables considerable reduction of circuit complexity and power consumption.

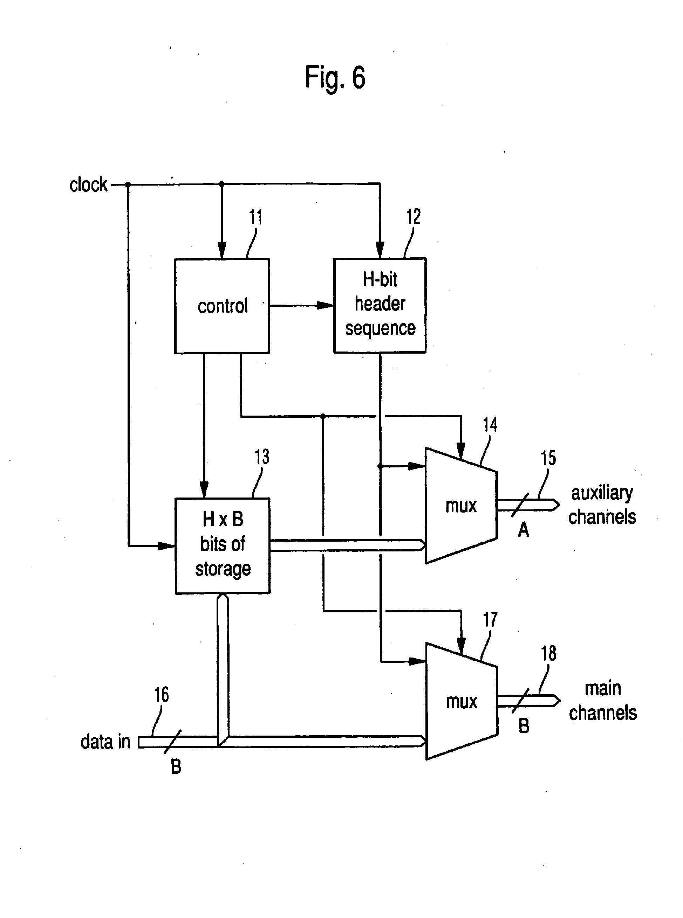

In contrast to this generalized model an embodiment of the invention is shown in Fig. 6. Also in this case data is received in parallel via parallel data input line 16. The input line 16 is B-bit wide. Instead of a look-up table a H x B bits accepting storage 13, a H-bit header sequence generator 12 and two multiplexers 14 and 17 are introduced.

As shown in Fig. 6 the inventive apparatus comprises the following elements: a number B of input channels receiving symbols, a number A of first output channels outputting symbols, a number B of second output channels outputting symbols, a header sequence generating H header symbols, at least one multiplexer per output channel, a temporary storage unit storing H x B input symbols, and a control unit co-ordinating the operation of the header sequence generator, the multiplexer and the temporary storage unit according to a clock signal.

The purpose of the invention is to convert B parallel, synchronous incoming symbol streams into B + A parallel, synchronous outgoing symbol streams, whereby each incoming symbol is present in one of the outgoing streams. An arbitrary header sequence of length H is added and appears at specific times in all outgoing streams while the clock rates of the incoming and outgoing symbol streams are identical.

In practice, the invention will usually be implemented in binary logic. The header sequence itself depends on the communication protocol. For example, in the case of 64B/66B coding, the header sequence is 01 or 10. For 8B/10B coding, the header sequence could be one of the comma characters existing in this code as discussed in A. Widmer, P. Franaszek, "A DC-Balanced, Partitioned-Block, 8B/10B Transmission Code". These mark the start and the end of a packet.

The invention operates in the following way. First, the control unit 11 instructs the H - bit header sequence generator 12 to generate a header of H bits for every output line of the A + B channels, this means A + B headers are generated. Then the multiplexers 14 and 17 are switched so that they receive the header symbols or bits from the H - bit header sequence generator 12. The header is then written to the output channels 15 and 18, i.e. depending on the signalling the voltage of each transmit line is held for one bit at a negative voltage and for the duration of another bit at a positive voltage.

After the header bits are transmitted the multiplexers 14 and 17 are instructed to receive data directly from the data-in line 16 or from the H x B bit storage device 13. In the embodiment of Fig. 6 multiplexer 14 receives its input data from the H x B bit storage device 13 and multiplexer 17 receives its input data directly from the data-in line 16. Both multiplexers 14 and 17 write the data, either from the storage 13 or from the data-in line 16 to the output channels 15 and 18, i.e they convert the bit representation to the respective signalling on the data channel.

The setting is maintained until a frame length of F bits is transmitted. Thereafter, the multiplexers 14 and 17 are again instructed to receive header bits from the H - bit header sequence generator 12. The header sequence generator 12 is then instructed to generate header bits and the storage unit 13 is instructed to store incoming data. This repeated frame generation is conducted until all data is transmitted.

The entire process occurs synchronously to the clock. The number A of auxiliary output streams must be chosen large enough that all H x B stored data symbols can be transmitted within F - H clock cycles. If A is larger than strictly necessary, it is possible that all H x B stored data symbols are transmitted in less than F - H clock cycles. In the remainder of the frame period, arbitrary data symbols (e.g. zeros) can be inserted in the A auxiliary output streams.

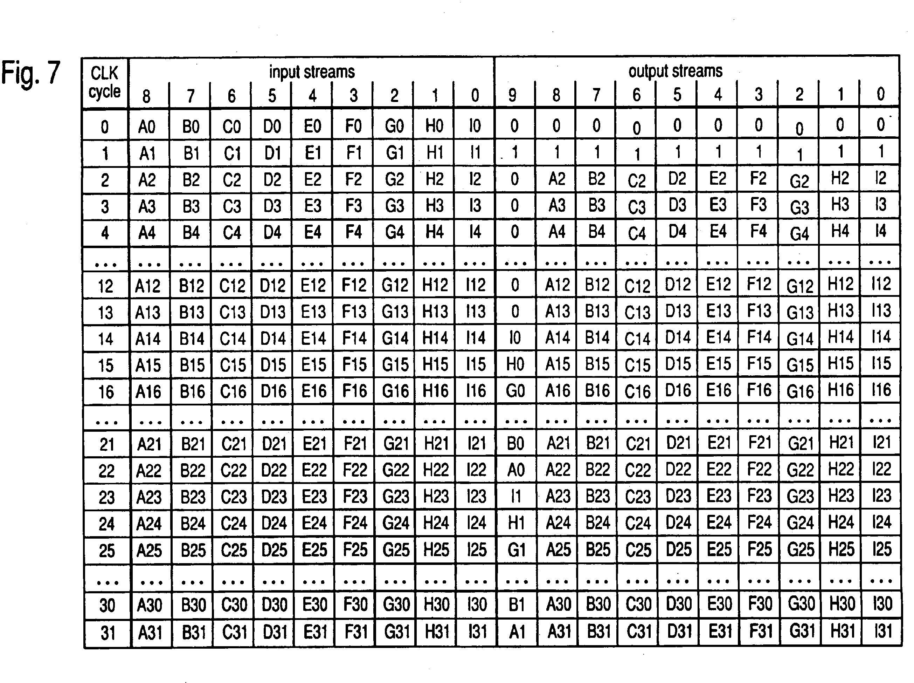

For illustration purposes, Fig. 7 shows a table with the incoming and outgoing data lines in the case where B = 9, A = 1, F = 32 and H = 2. The header sequence is 01. During clock cycles 0 and 1, data words A0 .. I0 and A1 .. I1 are stored into the temporary storage unit. These data words are transmitted serially over output stream number 9. This is conducted during clock cycles 14 through 31. In this example, F - H is 30 whereas H x B is 18, therefore 12 bits per frame in output stream 9 are unused. For this reason, zeros are transmitted on this output stream during clock cycles 2 through 13.

In summary, the key advantage of the invention over the state of the art is that it enables efficient insertion of synchronization headers in data communications channels where the data to be transmitted already comes in at high speed, namely at a rate so high that further serialization is not practical. This situation arises in high-speed A/D converters for instance. The proposed circuit is particularly efficient because of the following features: It does not require deserialization and reserialization. It does not require multiple clocks, especially no clocks running at a fractional frequency ratio.

## Claims

1. Apparatus for inserting synchronization headers into multiple high speed serial data communication streams comprising:
an input channel (16) receiving a number B of symbols in parallel,
a first output channel (15) transmitting a number A of symbols in parallel;
a second output channel (18) transmitting a number B of symbols in parallel,
a control unit (11),
a header sequence generator (12) generating a sequence of H header symbols in succession when triggered by the control unit (11),
a temporary storage unit (13) storing a number H x B of symbols,
a first multiplexer (14) connecting one of two signals to the first output channel,
and a second multiplexer (17) connecting one of two signals to the second output channel (18),
**characterized in that**,
the control unit (11) triggers the header sequence generator (12) every time a synchronization header must be transmitted;
the first multiplexer (14) selects the header sequence generator output for a number H of symbols after the header sequence generator (12) is triggered, then it selects the output of the temporary storage unit (13);
the second multiplexer (17) selects the header sequence generator output for a number H of symbols after the header sequence generator (12) is triggered, then it selects the input channel; and
the temporary storage unit (13) stores symbols incoming on the input channel for a number H of symbols after the header sequence generator (12) is triggered.

2. Apparatus according to claim 1,
**characterized in that**
the multiplexer (14) of the first output channel (15) is connected to the header sequence generator (12) to transmit header symbols when selected.

3. Apparatus according to claim 1 or 2,
**characterized in that**
the multiplexer (17) of the second output channel (18) is connected to the header sequence generator (12) to transmit header symbols when selected.

4. Apparatus according to any of claims 1 to 3,
**characterized in that**
the multiplexer (14) of the first output channel (15) is connected to the temporary storage unit (13) and transmits data therefrom when selected.

5. Apparatus according to any of claims 1 to 4,
**characterized in that**
the multiplexer (17) of the second output, channel (18) is connected to the input channel (16) and transmits data therefrom when selected.

6. Method for inserting synchronization headers into multiple high speed serial data communication streams with an apparatus consisting of an input channel (16) receiving a number B of symbols in parallel, a first output channel (15) transmitting a number A of symbols in parallel, a second output channel (18) transmitting a number B of symbols in parallel, a control unit (11), a header sequence generator (12) generating a sequence of H header symbols in succession when triggered by the control unit, a temporary storage unit (13) storing a number H x B symbols, a first multiplexer (14) connecting one of two signals to the first output channel (15), and a second multiplexer (17) connecting one of two signals to the second output channel (18), **characterised by** the following steps:
- Triggering the header sequence generator (12) by the control unit (11) every time a synchronization header must be transmitted;
- Selection of the header sequence generator output for a number H of symbols by the first multiplexer (14) after triggering the header sequence generator (12);
- Selection of the output of the temporary storage unit (13) by the first multiplexer (14);
- Selection of the header sequence generator output by the second multiplexer (17) for a number H of symbols after the header sequence generator (12) is triggered;
- Selection the input channel by the second multiplexer (17) ; and
- Storage of a number of symbols incoming on the input channel for a number H of symbols by the temporary storage unit (13) after the header sequence generator (12) is triggered.

7. Method according to claim 6,
**characterized in that**,
the second multiplexer (17) is instructed to transmit data from the input channel (16).

8. Method according to claim 6 or 7,
**characterized in that**,
the first multiplexer (14) is instructed to transmit data from the temporary storage unit (13).

9. Method according to any of claims 6 to 8,
**characterized in that**,
the header is transmitted via the first output channel (15).

10. Method according to any of claims 6 to 8,
**characterized in that**,
the header is transmitted via the second output channel (18).

11. Method according to claim 6 to 8,
**characterized in that**,
the header is transmitted via the first output channel (15) and the second output channel (18).

12. Method according to any of claims 6 to 11,
**characterized in that**,
the data from the temporary storage unit (13) is transmitted via the first output channel (15).

13. Method according to any of claims 6 to 12,
**characterized in that**,
the input channel (16) has a width of B Bits.

14. Method according to claim 13,
**characterized in that**,
the first output channel (15) has a width of A Bits.

15. Method according to claim 13 or 14,
**characterized in that**,
the second output channel (18) has a width of B Bits.

16. Method according to claim 15,
**characterized in that**,
a frame is transmitted composed of header symbols and data symbols.

17. Method according to claim 16,
**characterized in that**,
the Bit-length F of the frame is larger or equal to H x B + H Bits.

18. Method according to claim 17,
**characterized in that**,
if Bit-length F of the frame is larger than H x B + H the remaining space of the frame is filled with arbitrary symbols.

19. Method according to claim 18,
**characterized in that**,
the remaining space is filled with Nulls.

## Patentansprüche

1. Vorrichtung zum Einfügen von Synchronisationsköpfen in serielle Mehrfachdatenkommunikationsströme hoher Übertragungsgeschwindigkeit, mit
einem Eingangskanal (16), welcher eine Anzahl B von Symbolen parallel empfängt,
einen ersten Ausgangskanal (15), welcher eine Anzahl A Symbole parallel überträgt,
einem zweiten Ausgangskanal (18), welcher eine Anzahl B Symbole parallel überträgt,
einer Steuereinheit (11),
einem Kopf-Sequenz-Generator (12), welcher eine Sequenz von H Kopf-Symbolen nacheinander erzeugt, wenn er von der Steuereinheit (11) angestoßen wird,
einer temporären Speichereinheit (13), welche eine Anzahl von H x B Symbole speichert,
einem ersten Multiplexer (14), welcher eines von zwei Signalen mit dem ersten Ausgangskanal (15) verbindet, und
einem zweiten Multiplexer (17), welcher eines von zwei Signalen mit dem zweiten Ausgangskanal (18) verbindet,
**dadurch gekennzeichnet,**
**dass** die Steuereinheit (11) den Kopf-Sequenz-Generator (12) jedes Mal anstößt, wenn ein Synchronisationskopf übertragen werden muss,
**dass** der erste Multiplexer (14) nachdem der Kopf-Sequenz-Generator (12) angestoßen wurde das Ausgangssignal des Kopf-Sequenz-Generators (12) wählt bis H Symbole ausgegeben sind und anschließend das Ausgangssignal der temporären Speichereinheit (13) wählt,
**dass** der zweite Multiplexer (17) nachdem der Kopf-Sequenz-Generator (12) angestoßen wurde das Ausgangssignal des Kopf-Sequenz-Generators (12) wählt bis H Symbole ausgegeben sind und anschließend das Ausgangssignal der temporären Speichereinheit (13) wählt, und
**dass** die temporäre Speichereinheit (13) nachdem der Kopf-Sequenz-Generator (12) angestoßen wurde eine Anzahl H von auf dem Eingangskanal eingehenden Symbolen speichert.

2. Vorrichtung nach Anspruch 1,
**dadurch gekennzeichnet,**
**dass** der Multiplexer (14) des ersten Ausgangskanals (15) mit dem Kopf-Sequenz-Generator (12) verbunden ist, um, wenn ausgewählt, Kopf-Symbole zu übertragen.

3. Vorrichtung nach Anspruch 1 oder 2,
**dadurch gekennzeichnet,**
**dass** der Multiplexer (17) des zweiten Ausgangskanals (18) mit dem Kopf-Sequenz-Generator (12) verbunden ist, um, wenn ausgewählt, Kopf-Symbole zu übertragen.

4. Vorrichtung nach einem der Ansprüche 1 bis 3,
**dadurch gekennzeichnet,**
**dass** der Multiplexer (14) des ersten Ausgangskanals (15) mit der temporären Speichereinheit (13) verbunden ist, und, wenn ausgewählt, Daten von dort überträgt.

5. Vorrichtung nach einem der Ansprüche 1 bis 4,
**dadurch gekennzeichnet,**
**dass** der Multiplexer (17) des zweiten Ausgangskanals (18) mit dem Eingangskanal (16) verbunden ist, und, wenn ausgewählt, Daten von dort überträgt.

6. Verfahren zum Einfügen von Synchronisationsköpfen in serielle Mehrfachdatenkommunikationsströme hoher Übertragungsgeschwindigkeit, mit
einem Eingangskanal (16), welcher eine Anzahl B von Symbolen parallel empfängt,
einen ersten Ausgangskanal (15), welcher eine Anzahl A Symbole parallel überträgt,
einem zweiten Ausgangskanal (18), welcher eine Anzahl B Symbole parallel überträgt,
einer Steuereinheit (11),
einem Kopf-Sequenz-Generator (12), welcher eine Sequenz von H Kopf-Symbolen nacheinander erzeugt, wenn er von der Steuereinheit angestoßen wird,
einer temporären Speichereinheit (13), welche eine Anzahl von H x B Symbole speichert,
einem ersten Multiplexer (14), welcher eines von zwei Signalen mit dem ersten Ausgangskanal verbindet, und
einem zweiten Multiplexer (17), welcher eines von zwei Signalen mit dem zweiten Ausgangskanal (18) verbindet, **gekennzeichnet durch** die folgenden Schritte:
- Anstoßen des Kopf-Sequenz-Generators (12) **durch** die Steuereinheit (11), jedes Mal wenn ein Synchronisationskopf übertragen werden muss,
- Auswahl des Ausgangssignals des Kopf-Sequenz-Generators (12) **durch** den ersten Multiplexer (14) für eine Anzahl von H Symbolen nachdem der Kopf-Sequenz-Generator (12) angestoßen wurde,
- Auswahl des Ausgangssignals der temporären Speichereinheit (13) **durch** den ersten Multiplexer (14),
- Auswahl des Ausgangssignals des Kopf-Sequenz-Generators (12) **durch** den zweiten Multiplexer (17) für eine Anzahl von H Symbolen nachdem der Kopf-Sequenz-Generator (12) angestoßen wurde,
- Auswahl des Eingangskanals **durch** den zweiten Multiplexer (17), und
- Speicherung einer Anzahl H von auf dem Eingangskanal eingehenden Symbolen nachdem der Kopf-Sequenz-Generator (12) angestoßen wurde **durch** die temporäre Speichereinheit (13).

7. Verfahren nach Anspruch 6,
**dadurch gekennzeichnet,**
**dass** der zweite Multiplexer (17) instruiert ist, Daten von dem Eingangskanal (16) zu übertragen.

8. Verfahren nach Anspruch 6 oder 7,
**dadurch gekennzeichnet,**
**dass** der erste Multiplexer (14) instruiert ist, Daten von der temporären Speichereinheit (13) zu übertragen.

9. Verfahren nach einem der Ansprüche 6 bis 8,
**dadurch gekennzeichnet,**
**dass** der Synchronisationskopf von dem ersten Ausgangskanal (15) übertragen wird.

10. Verfahren nach einem der Ansprüche 6 bis 8,
**dadurch gekennzeichnet,**
**dass** der Synchronisationskopf von dem zweiten Ausgangskanal (18) übertragen wird.

11. Verfahren nach einem der Ansprüche 6 bis 8,
**dadurch gekennzeichnet,**
**dass** der Synchronisationskopf von dem ersten Ausgangskanal (15) und dem zweiten Ausgangskanal (18) übertragen wird.

12. Verfahren nach einem der Ansprüche 6 bis 11,
**dadurch gekennzeichnet,**
**dass** die Daten von der temporären Speichereinheit (13) von dem ersten Ausgangskanal (15) übertragen werden.

13. Verfahren nach einem der Ansprüche 6 bis 12,
**dadurch gekennzeichnet,**
**dass** der Eingangskanal (16) eine Breite von B Bits aufweist.

14. Verfahren nach Anspruch 13,
**dadurch gekennzeichnet,**
**dass** der erste Ausgangskanal (15) eine Breite von A Bits aufweist.

15. Verfahren nach Anspruch 13 oder 14,
**dadurch gekennzeichnet,**
**dass** der zweite Ausgangskanal (18) eine Breite von B Bits aufweist.

16. Verfahren nach Anspruch 15,
**dadurch gekennzeichnet,**
**dass** ein Rahmen, welcher aus Kopf-Symbolen und DatenSymbolen besteht, übertragen wird.

17. Verfahren nach Anspruch 16,
**dadurch gekennzeichnet,**
**dass** die Bit-Länge F des Rahmens größer oder gleich H x B + H Bits ist.

18. Verfahren nach Anspruch 17,
**dadurch gekennzeichnet,**
**dass** wenn die Bit-Länge F des Rahmens größer als H x B + H ist, die verbleibende Länge des Rahmens mit beliebigen Symbolen gefüllt wird.

19. Verfahren nach Anspruch 18,
**dadurch gekennzeichnet,**
**dass** die verbleibende Länge mit Nullen gefüllt wird.

## Revendications

1. Appareil d'insertion d'en-têtes de synchronisation dans plusieurs flux de communication de données série à haute vitesse, comprenant :
un canal d'entrée (16) recevant un nombre B de symboles en parallèle,
un premier canal de sortie (15) transmettant un nombre A de symboles en parallèle,
un deuxième canal de sortie (18) transmettant un nombre B de symboles en parallèle, une unité de commande (11),
un générateur de séquence d'en-tête (12) générant une séquence de symboles d'en-tête H à la suite les uns des autres lorsque il est déclenché par l'unité de commande (11),
une unité de stockage temporaire (13) stockant un nombre H x B de symboles,
un premier multiplexeur (14) connectant l'un de deux signaux au premier canal de sortie,
et un deuxième multiplexeur (17) connectant l'un de deux signaux au deuxième canal de sortie (18),
**caractérisé en ce que**
l'unité de commande (11) déclenche le générateur de séquence d'en-tête (12) à chaque fois qu'un en-tête de synchronisation doit être transmis ;
le premier multiplexeur (14) sélectionne la sortie du générateur de séquence d'en-tête pendant un nombre H de symboles après que le générateur de séquence d'en-tête (12) a été déclenché, puis il sélectionne la sortie de l'unité de stockage temporaire (13) ;
le deuxième multiplexeur (17) sélectionne la sortie du générateur de séquence d'en-tête pendant un nombre H de symboles après que le générateur de séquence d'en-tête (12) a été déclenché, puis il sélectionne le canal d'entrée ; et
l'unité de stockage temporaire (13) stocke les symboles entrant sur le canal d'entrée pendant un nombre H de symboles après que le générateur de séquence d'en-tête (12) a été déclenché.

2. Appareil selon la revendication 1, **caractérisé en ce que** le multiplexeur (14) du premier canal de sortie (15) est connecté au générateur de séquence d'en-tête (12) pour transmettre des symboles d'en-tête lorsqu'il est sélectionné.

3. Appareil selon la revendication 1 ou 2, **caractérisé en ce que** le multiplexeur (17) du deuxième canal de sortie (18) est connecté au générateur de séquence d'en-tête (12) pour transmettre des symboles d'en-tête lorsqu'il est sélectionné.

4. Appareil selon l'une quelconque des revendications 1 à 3, **caractérisé en ce que** le multiplexeur (14) du premier canal de sortie (15) est connecté à l'unité de stockage temporaire (13) et transmet des données depuis celle-ci lorsqu'il est sélectionné.

5. Appareil selon l'une quelconque des revendications 1 à 4, **caractérisé en ce que** le multiplexeur (17) du deuxième canal de sortie (18) est connecté au canal d'entrée (16) et transmet des données depuis celui-ci lorsqu'il est sélectionné.

6. Procédé d'insertion d'en-têtes de synchronisation dans plusieurs flux de communication de données série à haute vitesse, au moyen d'un appareil constitué d'un canal d'entrée (16) recevant un nombre B de symboles en parallèle, d'un premier canal de sortie (15) transmettant un nombre A de symboles en parallèle, d'un deuxième canal de sortie (18) transmettant un nombre B de symboles en parallèle, d'une unité de commande (11), d'un générateur de séquence d'en-tête (12) générant une séquence de symboles d'en-tête H à la suite les uns des autres lorsque il est déclenché par l'unité de commande, d'une unité de stockage temporaire (13) stockant un nombre H x B de symboles, d'un premier multiplexeur (14) connectant l'un de deux signaux au premier canal de sortie (15), et d'un deuxième multiplexeur (17) connectant l'un de deux signaux au deuxième canal de sortie (18), **caractérisé par** les étapes suivantes :
- déclenchement du générateur de séquence d'en-tête (12) par l'unité de commande (11) à chaque fois qu'un en-tête de synchronisation doit être transmis ;
- sélection de la sortie du générateur de séquence d'en-tête pendant un nombre H de symboles par le premier multiplexeur (14) après que le générateur de séquence d'en-tête (12) a été déclenché ;
- sélection de la sortie de l'unité de stockage temporaire (13) par le premier multiplexeur (14) ;
- sélection de la sortie du générateur de séquence d'en-tête pendant un nombre H de symboles par le deuxième multiplexeur (17) après que le générateur de séquence d'en-tête (12) a été déclenché,
- sélection du canal d'entrée par le deuxième multiplexeur (17) ; et
- stockage d'un nombre de symboles entrant sur le canal d'entrée pendant un nombre H de symboles dans l'unité de stockage temporaire (13) après que le générateur de séquence d'en-tête (12) a été déclenché.

7. Procédé selon la revendication 6, **caractérisé en ce que** le deuxième multiplexeur (17) reçoit l'instruction de transmettre des données depuis le canal d'entrée (16).

8. Procédé selon la revendication 6 ou 7, **caractérisé en ce que** le premier multiplexeur (14) reçoit l'instruction de transmettre des données depuis l'unité de stockage temporaire (13).

9. Procédé selon l'une quelconque des revendications 6 à 8, **caractérisé en ce que** l'en-tête est transmis via le premier canal de sortie (15).

10. Procédé selon l'une quelconque des revendications 6 à 8, **caractérisé en ce que** l'en-tête est transmis via le deuxième canal de sortie (18).

11. Procédé selon les revendications 6 à 8, **caractérisé en ce que** l'en-tête est transmis via le premier canal de sortie (15) et le deuxième canal de sortie (18).

12. Procédé selon l'une quelconque des revendications 6 à 11, **caractérisé en ce que** les données provenant de l'unité de stockage temporaire (13) sont transmises via le premier canal de sortie (15).

13. Procédé selon l'une quelconque des revendications 6 à 12, **caractérisé en ce que** le canal d'entrée (16) a une largeur de B bits.

14. Procédé selon la revendication 13, **caractérisé en ce que** le premier canal de sortie (15) a une largeur de A bits.

15. Procédé selon la revendication 13 ou 14, **caractérisé en ce que** le deuxième canal de sortie (18) a une largeur de B bits.

16. Procédé selon la revendication 15, **caractérisé en ce qu'**une trame est transmise qui est constituée de symboles d'en-tête et de symboles de données.

17. Procédé selon la revendication 16, **caractérisé en ce que** la longueur de bits F de la trame est supérieure ou égale à H x B + H bits.

18. Procédé selon la revendication 17, **caractérisé en ce que**, si la longueur de bits F de la trame est supérieure à H x B + H, l'espace restant de la trame est rempli avec des symboles arbitraires.

19. Procédé selon la revendication 18, **caractérisé en ce que** l'espace restant est rempli de zéros.
